# EUROPEAN PATENT SPECIFICATION

(11) **EP 4 579 601 B1**
(45) Date of publication and mention of the grant of the patent: **02.12.2026**
(21) Application number: 23857232.5
(22) Date of filing: 10.08.2023
(51) Int. Cl.: G06F 21/62, G06T 19/00, G06T 7/00, G06T 7/70, G06V 10/143, G06V 10/10, G06V 10/764, G06V 10/778, G06V 10/82, G06V 20/52, G06V 20/64, G06T 7/50, G06T 19/20, G06T 17/00

(54) **INFORMATION PROCESSING DEVICE, INFORMATION PROCESSING SYSTEM, INFORMATION PROCESSING METHOD, AND COMPUTER PROGRAM**
INFORMATIONSVERARBEITUNGSVORRICHTUNG, INFORMATIONSVERARBEITUNGSSYSTEM, INFORMATIONSVERARBEITUNGSVERFAHREN UND COMPUTERPROGRAMM
DISPOSITIF DE TRAITEMENT D'INFORMATIONS, SYSTÈME DE TRAITEMENT D'INFORMATIONS, PROCÉDÉ DE TRAITEMENT D'INFORMATIONS ET PROGRAMME D'ORDINATEUR

(30) Priority: 23.08.2022 JP 2022132597
(43) Date of publication of application: 02.07.2025
(73) Proprietor: Daikin Industries, Ltd., Osaka-shi, Osaka 530-0001 (JP)
(72) Inventor: SATO, Daisuke, OSAKA 530 0001 (JP); KANAYAMA, Hiroaki, OSAKA 530 0001 (JP); SABU, Shunsuke, OSAKA, 530 0001 (JP)
(74) Representative: Goddar, Heinz J.
(86) International application number: PCT/JP2023/029275
(87) International publication number: WO 2024/043119

(56) References cited:
- CN-A- 110 910 503
- CN-A- 112 944 562
- JP-A- 2015 018 360
- JP-A- 2015 148 410
- JP-A- 2017 046 196
- US-A1- 2015 084 755
- US-A1- 2015 143 459
- US-A1- 2021 067 694

## Description

### Technical Field

The present disclosure relates to an information processing apparatus, an information processing system, an information processing method, and a computer program.

### Background Art

PTL 1 discloses a technique of generating model data indicating the shape of an object based on three dimensional point group data and performing fluid calculation using the model data generated. According to PTL 1, it is possible to acquire shape information of a three dimensional space by using the three dimensional point group data and generate an indoor outer shape model.

PTL2 discloses a system in which an information processing apparatus acquires environmental data from various sensors, recognizes surfaces and objects within a target space, and generates a three-dimensional model of the environment. PTL2 further describes automated privacy features, wherein sensitive objects or persons may be replaced with semantic abstractions or "screens" to prevent disclosure of confidential information to certain applications. PTL3 relates to a device that acquires point cloud data representing the inside of a target space. Using this data, a three-dimensional model of the target space is generated and analysis is performed based on the acquired data. PTL 4 discloses a system for privacy protection in image data, wherein sensitive regions in captured images are automatically obfuscated to conceal confidential information.

### Citation List

### Patent Literature

PTL 1: Japanese Patent No. 6286902
PTL 2: US 2015/143459 A1
PTL 3: JP 2015 018360 A
PTL 4: US 2021/067694 A1

### Summary of Invention

### Technical Problem

However, there has been a problem in that when a confidential object is included in the three dimensional point group data, the confidential object is modeled as it is. The object that requires confidential information may be simply masked but in such a case, the boundary conditions required for the fluid calculation would not be set, and thus, there has been a problem in that the accuracy of the fluid calculation is compromised.

An object of the present disclosure is to provide an information processing apparatus and the like with which a confidential object included in a target space can be concealed and an attribute and a position of the concealing target object can be output in association with each other. Solution to Problem

An information processing apparatus according to a first aspect of the present disclosure includes: an acquisition unit configured to acquire target space data obtained by measuring an inside of a target space; and a processing unit, wherein the processing unit is configured to recognize an attribute and a position of a concealing target object based on the target space data acquired by the acquisition unit, output the attribute and the position of the concealing target object with respect to an environment of the target space in association with each other based on the target space data acquired by the acquisition unit and the attribute and the position of the concealing target object in the target space, and process concealed information of the concealing target object.

As described above, the information processing apparatus according to the first aspect of the present disclosure includes: the acquisition unit configured to acquire the target space data obtained by measuring the inside of the target space; and the processing unit. The processing unit recognizes the attribute and the position of the concealing target object based on the target space data acquired by the acquisition unit, outputs the target space data and the attribute and the position of the concealing target object in association with each other, and processes the concealed information of the concealing target object.

An information processing apparatus according to a second aspect of the present disclosure is the information processing apparatus according to the first aspect, wherein a three dimensional space model of the target space reflecting the attribute and the position of the concealing target object with respect to the environment of the target space is generated based on the target space data acquired by the acquisition unit and the attribute and the position of the concealing target object in the target space, and the concealed information of the concealing target object in the three dimensional space model is processed.

An information processing apparatus according to a third aspect of the present disclosure is the information processing apparatus according to the first or second aspect, wherein the concealing target object includes at least one of a display device, a person, an industrial machine, a document, a destination display board, a bulletin object, a whiteboard, a blackboard, a tag, and a postal item.

An information processing apparatus according to a fourth aspect of the present disclosure is the information processing apparatus according to any one of the first to third aspects, wherein the processing unit acquires thermographic data of the target space.

An information processing apparatus according to a fifth aspect of the present disclosure is the information processing apparatus according to any one of the first to fourth aspects, wherein the processing unit generates the three dimensional space model including a heat generation condition of the concealing target object based on the acquired thermographic data.

An information processing apparatus according to a sixth aspect of the present disclosure is the information processing apparatus according to any one of the first to fifth aspects, wherein the processing unit acquires from a storage unit storing the attribute of the concealing target object and impact defining data defining an impact of the concealing target object on the environment of the target space in association with each other, the impact defining data of the concealing target object, and generates the three dimensional space model based on the target space data and the impact defining data acquired.

An information processing apparatus according to a seventh aspect of the present disclosure is the information processing apparatus according to any one of the first to sixth aspects, wherein the impact defining data includes a thermal boundary condition.

An information processing apparatus according to an eighth aspect of the present disclosure is the information processing apparatus according to any one of the first to seventh aspects, wherein the processing unit determines whether the target space data redundantly includes the concealing target object.

An information processing apparatus according to a ninth aspect of the present disclosure is the information processing apparatus according to any one of the first to eighth aspects, wherein upon redundantly recognizing the concealing target object included in the target space, the processing unit removes the redundant concealing target object.

An information processing apparatus according to a tenth aspect of the present disclosure is the information processing apparatus according to any one of the first to ninth aspects, wherein the processing unit generates the three dimensional space model by replacing the concealing target object with a model object including no concealed information.

An information processing system according to an eleventh aspect of the present disclosure includes: the information processing apparatus according to any one of the first to tenth aspects; and a measurement apparatus configured to measure a physical quantity related to a shape in the target space, wherein the information processing apparatus acquires the target space data from the measurement apparatus.

An information processing system according to a twelfth aspect of the present disclosure is an information processing system including an information processing apparatus, wherein the information processing apparatus includes an acquisition unit configured to acquire target space data obtained by measuring an inside of a target space, and a processing unit, the processing unit is configured to recognize an attribute and a position of a concealing target object based on the target space data acquired by the acquisition unit, output the attribute and the position of the concealing target object with respect to an environment of the target space in association with each other based on the target space data acquired by the acquisition unit and the attribute and the position of the concealing target object in the target space, and process concealed information of the concealing target object.

As described above, the information processing system according to the twelfth aspect of the present disclosure is an information processing system including the information processing apparatus. The information processing apparatus includes the acquisition unit configured to acquire the target space data obtained by measuring the inside of the target space; and the processing unit. The processing unit recognizes the attribute and the position of the concealing target object based on the target space data acquired by the acquisition unit, outputs the target space data and the attribute and the position of the concealing target object in association with each other, and processes the concealed information of the concealing target object.

An information processing method according to a thirteenth aspect of the present disclosure includes: acquiring target space data obtained by measuring an inside of a target space; recognizing an attribute and a position of a concealing target object based on the target space data acquired; outputting the attribute and the position of the concealing target object with respect to an environment of the target space in association with each other based on the target space data acquired and the attribute and the position of the concealing target object in the target space; and processing concealed information of the concealing target object.

As described above, the information processing method according to the thirteenth aspect of the present disclosure includes: acquiring the target space data obtained by measuring the inside of the target space; recognizing the attribute and the position of the concealing target object based on the target space data acquired; outputting the target space data and the attribute and the position of the concealing target object in association with each other; and processing the concealed information of the concealing target object.

A computer program according to a fourteenth aspect of the present disclosure causes a computer to execute processing of: acquiring target space data obtained by measuring an inside of a target space; recognizing an attribute and a position of a concealing target object based on the target space data acquired; outputting the attribute and the position of the concealing target object with respect to an environment of the target space in association with each other based on the target space data acquired and the attribute and the position of the concealing target object in the target space; and processing the concealed information of the concealing target object.

As described above, the computer program according to the fourteenth aspect of the present disclosure causes a computer to execute processing of: acquiring the target space data obtained by measuring the inside of the target space; recognizing the attribute and the position of the concealing target object based on the target space data acquired; outputting the target space data and the attribute and the position of the concealing target object in association with each other; and processing the concealed information of the concealing target object.

### Brief Description of Drawings

[Fig. 1] Fig. 1 is a block diagram illustrating a configuration example of an information processing system according to the present embodiment.
[Fig. 2] Fig. 2 is a perspective view illustrating a configuration example and a usage example of a measurement apparatus according to the present embodiment.
[Fig. 3] Fig. 3 is a conceptual diagram of a learning model according to the present embodiment.
[Fig. 4] Fig. 4 is a conceptual diagram of an object DB according to the present embodiment.
[Fig. 5] Fig. 5 is a flowchart illustrating a processing procedure of the information processing apparatus system according to the present embodiment.
[Fig. 6] Fig. 6 is a flowchart illustrating a processing procedure for generating a three dimensional space model.
[Fig. 7] Fig. 7 is a flowchart illustrating a processing procedure for generating the three dimensional space model.
[Fig. 8] Fig. 8 is an explanatory view illustrating an example of three dimensional point groups and a captured image.
[Fig. 9] Fig. 9 is an explanatory view illustrating an example of the three dimensional space model.
[Fig. 10] Fig. 10 is a conceptual diagram illustrating concealing processing for a concealing target object.
[Fig. 11] Fig. 11 is a conceptual diagram illustrating processing of removing a redundant object.
[Fig. 12] Fig. 12 is a flowchart illustrating an object editing processing procedure.
[Fig. 13A] Fig. 13A is a conceptual diagram illustrating an object changing method.
[Fig. 13B] Fig. 13B is a conceptual diagram illustrating the object changing method.
[Fig. 13C] Fig. 13C is a conceptual diagram illustrating the object changing method.
[Fig. 14A] Fig. 14A is a conceptual diagram illustrating an object adding method.
[Fig. 14B] Fig. 14B is a conceptual diagram illustrating the object adding method.
[Fig. 14C] Fig. 14C is a conceptual diagram illustrating the object adding method.
[Fig. 15A] Fig. 15A is a conceptual diagram illustrating a method of editing a plane forming a target space.
[Fig. 15B] Fig. 15B is a conceptual diagram illustrating the method of editing the plane forming the target space.
[Fig. 15C] Fig. 15C is a conceptual diagram illustrating the method of editing the plane forming the target space.

### Description of Embodiments

An air-conditioning-related device and an air conditioning system according to the present embodiment of the present disclosure will be described below with reference to the drawings. The overview of the present embodiment is as follows.

When air-conditioning-related business activities are performed during a visit to a property of a customer, air flow analysis is performed under the actual conditions of the property, so that devices can be proposed with problems in the air environment, which are considered to be actually occurring in the customer property, clarified. The problems include temperature unevenness, stagnation, and the like. However, when a fluid calculation model for actually performing the air flow analysis is generated, it takes quite a long time to measure and model an indoor shape and equipment, and to set conditions such as a heat source.

As a means for solving the problem described above, a method of automatically generating a fluid calculation model is proposed. As a system example, images are captured while walking in a space by using a handheld depth camera, camera, thermography, and smartphone-integrated module, and a depth image and an image in the space are stored in the smartphone. The data stored in the smartphone is transferred to an information processing apparatus 1, and three dimensional point group data is generated using software for three dimensional reconstruction. A floor, a wall, and a ceiling are detected from the three dimensional point group data, and a fluid calculation model, which is a space model of a surface, is generated. Here, the type (air conditioner, equipment, or the like) and the position of an object are identified through image recognition, learned in advance by machine learning, on the captured image, and are reflected on the three dimensional space model. The image may be captured by using a vacuuming robot, a drone, or the like instead of being captured by a person using a handheld device.

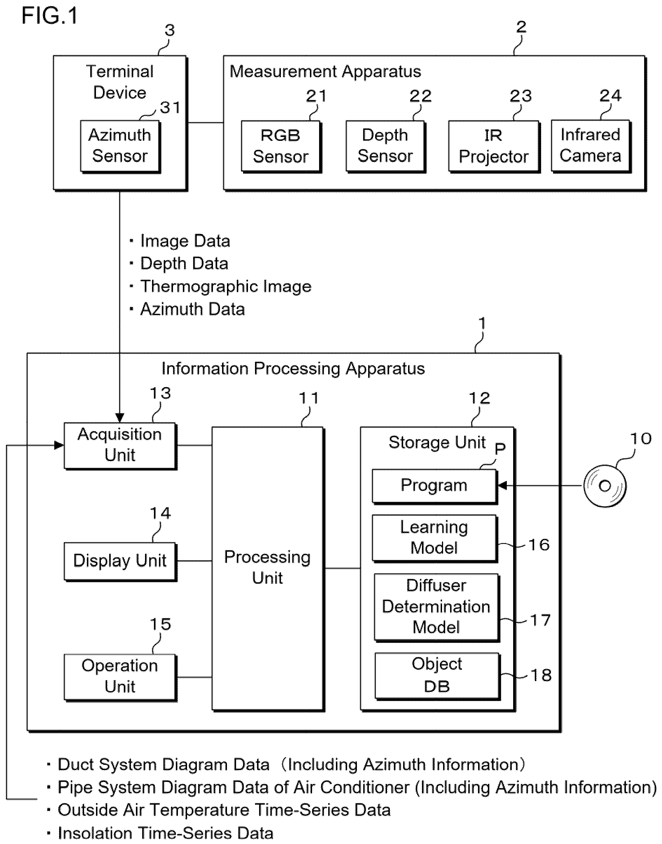

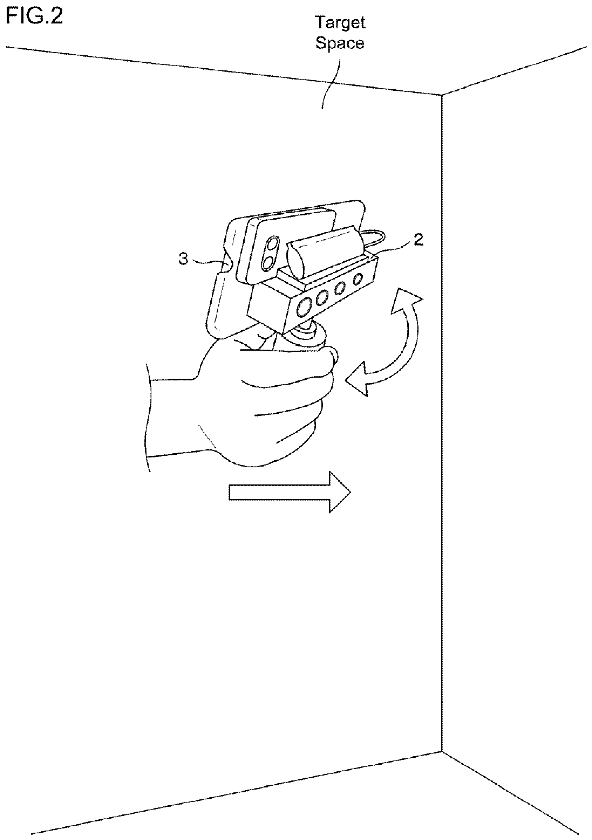

Fig. 1 is a block diagram illustrating a configuration example of an information processing system according to the present embodiment, and Fig. 2 is a perspective view illustrating a configuration example and a usage example of a measurement apparatus 2 according to the present embodiment. The information processing system according to the present embodiment includes the information processing apparatus 1, the measurement apparatus 2, and a terminal device 3. The information processing system semiautomatically generates a three dimensional space model for capturing an image and measuring the distance for a space having a surface in at least a part thereof and predicting the environment of the space based on data obtained by the measurement. Hereinafter, a space to be modeled is referred to as a target space.

The target space includes one or a plurality of objects that may affect the environment of the target space. The object includes at least one of an object that affects the air flow in the target space, an object that affects the thermal environment in the target space, an object that affects the air quality in the target space, and an object that controls the environment in the target space. Specifically, the object includes at least one of equipment, a fitting, a person, an industrial machine, a plant, an air conditioner, and a ventilation device. The equipment includes at least one of a computer, a monitor, a lighting fixture, a heater, and a chair. The fitting includes at least one of a window, a blind, a partition, and a door. The air conditioner includes an air purifier.

The target space has a duct system for ventilation. The duct system includes an air inlet or an air outlet of an air conditioner or a ventilation device. The target space includes a pipe system of an air conditioner.

Meanwhile, the object includes a concealing target object with confidentiality and a non-concealing target object with no confidentiality. The concealing target object includes at least one of a display device, a person, an industrial machine, a document, a destination display board, a bulletin object, a whiteboard, a blackboard, a tag, and a postal item.

The measurement apparatus 2 is an apparatus that includes an RGB sensor 21, a depth sensor 22, an IR projector 23, an infrared camera 24, a gripping part, and a terminal holding part and measures a physical quantity related to a shape in a target space. The gripping part is a member gripped by a user of the measurement apparatus 2. The gripping part is, for example, a bar-shaped member. The terminal holding part is a member for holding the terminal device 3.

The RGB sensor 21 is a camera that includes an image sensor such as a CMOS sensor or a CCD sensor for example and captures a color image of a target space. The RGB sensor 21 can capture a moving image. The RGB sensor 21 outputs time-series image data (RGB data) obtained by imaging the target space. It is assumed that the time-series image data in the moving image includes time data indicating the capturing date and time.

The depth sensor 22 measures a distance (depth) from the measurement apparatus 2 to a wall surface of the target space and various objects included in the target space. The depth sensor 22 outputs depth data indicating a depth obtained by the distance measurement. The IR projector 23 is an element for projecting infrared rays onto a target space and an object in order to obtain more accurate depth data.

The infrared camera 24 is a camera that includes an infrared image sensor and captures an image of a target space using infrared rays. The infrared camera 24 outputs thermographic image data obtained by imaging the target space.

The measurement apparatus 2 configured as described above outputs the image data, the depth data, and the thermographic image data to the terminal device 3. The measurement apparatus 2 may be configured to output the image data, the depth data, and the thermographic image data to an external portable storage device for storage. The measurement apparatus 2 may be configured to transmit the image data, the depth data, and the thermographic image data directly to the information processing apparatus 1. Hereinafter, the image data and the depth data are referred to as target space data.

The terminal device 3 is, for example, a portable information processing terminal such as a smartphone, a mobile phone, a tablet terminal, or a personal digital assistant (PDA). The terminal device 3 includes an input interface to which image data, depth data, a thermographic image, and azimuth data are input. The terminal device 3 includes an azimuth sensor 31.

The azimuth sensor 31 is, for example, an azimuth meter such as an electronic compass, and outputs azimuth data indicating the azimuth of the measurement apparatus 2.

The content of the azimuth data is not limited as long as the azimuth data is information with which the azimuth of the target space can be identified. For example, the azimuth data may be information based on the latitude, the longitude, and the time of the target space and the position of a celestial object. The celestial object is an object, an image of which can be captured, existing in the universe with the position on the celestial sphere being known. The celestial object is, for example, the sun, the moon, an artificial satellite, or the like. If a celestial object whose position on the celestial sphere is known is included in the captured image, and the latitude and longitude of the target space the image of which is captured and the capturing time are known, the azimuth of the target space can be identified.

The azimuth data may be information based on the latitude, the longitude, and the time of the target space, and the direction and length of an indoor shadow. Since the position of the sun is identified from the direction and length of the shadow, it is possible to identify the azimuth of the target space as described above.

A processing unit 11 of the information processing apparatus 1 can identify the azimuth of the target space based on these pieces of information.

The terminal device 3 causes a display device to display the image captured by the measurement apparatus 2 based on the image data input via the input interface. The terminal device 3 stores the input image data, depth data, and thermographic image, as well as azimuth data obtained by the azimuth sensor 31, and transmits the data to the information processing apparatus 1 at an appropriate timing. The terminal device 3 may be configured to store the input image data, depth data, and thermographic image, as well as the azimuth data obtained by the azimuth sensor 31 in a portable storage device.

With the measurement apparatus 2 configured as described above, the user can capture an image of a wall surface, a floor surface, a ceiling surface, and an object in the target space and measure a distance to the wall surface, the floor surface, the ceiling surface, and the object from a plurality of positions and directions by moving in the target space while holding the measurement apparatus 2 and directing the measurement apparatus 2 in various directions. The measurement apparatus 2 provides the information processing apparatus 1 with target space data, thermographic image data, and azimuth data obtained by measuring the inside of the target space from a plurality of positions.

<Information processing apparatus 1>

The information processing apparatus 1 includes the processing unit 11, a storage unit 12, an acquisition unit 13, a display unit 14, and an operation unit 15.

The processing unit 11 is a processor including an arithmetic circuit such as a central processing unit (CPU), a micro-processing unit (MPU), an application specific integrated circuit (ASIC), or a field-programmable gate array (FPGA), an internal storage device such as a read only memory (ROM) or a random access memory (RAM), an I/O terminal, and the like. The processing unit 11 may include one or a plurality of arithmetic circuits such as a graphics processing unit (GPU), a tensor processing unit (TPU), or an AI chip (semiconductor for AI) specialized for image processing related to object detection and image recognition. The processing unit 11 generates a three dimensional space model of the target space by reading and executing a computer program (program product) P stored in the storage unit 12. Each of the functional units related to the generation of the three dimensional space model may be realized by software, or some or all of the functional units may be realized by hardware.

The storage unit 12 is, for example, a storage such as a hard disk, an electrically erasable programmable ROM (EEPROM), or a flash memory. The storage unit 12 stores various programs to be executed by the processing unit 11 and various types of data necessary for processing by the processing unit 11. In the present embodiment, the storage unit 12 stores at least the computer program P executed by the processing unit 11, a learning model 16, a diffuser determination model 17, and an object DB 18. Details of the learning model 16, the diffuser determination model 17, and the object DB 18 will be described below.

The computer program P may be written in the storage unit 12 at the manufacturing stage of the information processing apparatus 1, or may be distributed from another information processing apparatus 1 or the like via a network. The information processing apparatus 1 acquires the computer program P through communication and writes the computer program P in the storage unit 12. The computer program P may be readably recorded in a recording medium 10 such as a semiconductor memory such as a flash memory, an optical disk, a magneto-optical disk, or a magnetic disk. The information processing apparatus 1 reads the computer program P and stores the computer program P in the storage unit 12.

The acquisition unit 13 is a communication circuit that transmits and receives data to and from an external device in a wired or wireless manner, or a reading circuit that reads data from a portable storage device. The information processing apparatus 1 acquires image data, depth data, thermographic image data, azimuth data, and the like from the measurement apparatus 2 via the acquisition unit 13.

The information processing apparatus 1 acquires duct system diagram data indicating a duct system related to an air inlet or an air outlet of a ventilation device in a target space from an external device via the acquisition unit 13. The duct system diagram data includes direction information indicating a direction of the duct system and outline information indicating an outline of the duct system. The outline information includes information indicating the position of the air inlet or the air outlet of the air conditioner or the ventilation device.

The information processing apparatus 1 acquires pipe system diagram data indicating a pipe system diagram of a target space from an external device via the acquisition unit 13. The pipe system diagram data includes direction information indicating the direction of the pipe system and outline information indicating the outline of the pipe system. The pipe system diagram data includes information related to the position of the indoor unit, the thermal boundary condition of the air conditioner, and the like.

The information processing apparatus 1 acquires outside air temperature time-series data of the target space and insolation time-series data in the target space from an external device via the acquisition unit 13.

The display unit 14 is a display device such as a liquid crystal display panel or an organic EL display panel, for example. The processing unit 11 causes an image related to the three dimensional space model to be displayed on the display unit 14.

The operation unit 15 is an input device such as a mouse, a keyboard, or a touch panel that accepts an operation of the user of the information processing apparatus 1. The processing unit 11 accepts editing of the three dimensional space model by the user and the like via the operation unit 15.

The information processing apparatus 1 may be a server apparatus connected to a network. The information processing apparatus 1 may be configured by a terminal computer and a server apparatus. The information processing apparatus 1 may be configured by a plurality of computers to execute distributed processing, may be realized by a plurality of virtual machines provided in one server, or may be realized by using a cloud server. Further, the information processing apparatus 1 may be the terminal device 3. In other words, the terminal device 3 may be configured to function as the information processing apparatus 1.

### <Learning model 16>

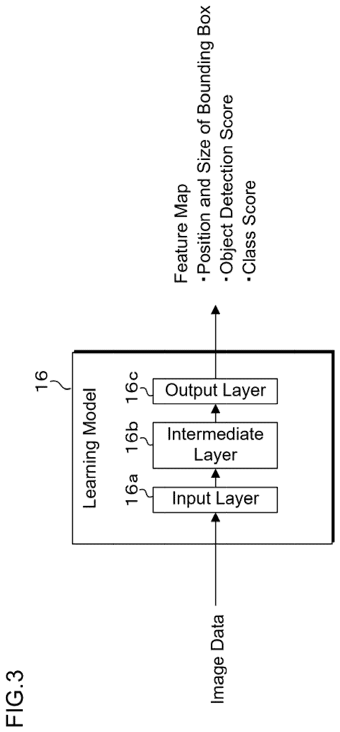

Fig. 3 is a conceptual diagram of the learning model 16 according to the present embodiment. The learning model 16 includes, for example, a convolutional neural network (CNN) that has been trained by deep learning. The learning model 16 includes an input layer 16a to which image data captured using the measurement apparatus 2 is input, an intermediate layer 16b that extracts a feature amount of the image data, and an output layer 16c that outputs an inference result related to a detected object. The learning model 16 is, for example, a YOLO model.

Each layer of the learning model 16 has a plurality of nodes. The nodes of each layer are connected by edges. Each layer has an activation function (response function), and an edge has a weight. The value output from the node of each layer is calculated from the value of the node of the previous layer, the weight of the edge, and the activation function of the layer. The weight of the edge can be changed by learning.

The input layer 16a of the learning model 16 includes a plurality of nodes that accept input of image data, that is, pixel values of pixels in an image of the target space and a surface of an object, and passes the input pixel values to the intermediate layer 16b.

The intermediate layer 16b includes a plurality of sets of convolutional layers (CONV layers) and pooling layers, as well as a fully connected layer. The convolutional layer executes filtering processing on the values output from the nodes of the previous layer and extracts a feature map. The pooling layer reduces the feature map output from the convolutional layer to obtain a new feature map.

The output layer 16c includes a node that outputs a final inference result for an object detected in the image data. The inference result includes a center coordinate position and vertical and horizontal sizes of a bounding box enclosing the object, an object detection score indicating a probability of an image surrounded by the bounding box being an image of the object, a class score indicating a probability of the object belonging to a certain class, and the like.

The outputs obtained from the output layer 16c include a plurality of overlapping bounding boxes. Thus, postprocessing for removing overlapping bounding boxes, for example, non-maximum suppression (NMS) processing, is executed so that the position and size, as well as the object detection score and the class score are obtained for the most likely bounding box enclosing each of one or a plurality of objects included in the image of the target space.

A method of generating the learning model 16 will be described. First, training data including a plurality of pieces of image data of a target space including an object and an annotation file of each image data is prepared. The annotation file is teacher data indicating a correct value given to a corresponding image. Specifically, the annotation file is data indicating a center coordinate position, vertical and horizontal sizes, and a class of a bounding box enclosing an image of an object included in a corresponding image. The class indicates a group classified according to the attribute of the object.

The learning model 16 can be generated through optimization of a weight coefficient of the neural network using an error back propagation method, an error gradient descent method, or the like to achieve a small error (a value of a predetermined loss function or error function) between data output from the CNN in response to an input of an image of the training data to the CNN and data indicated by the teacher data.

While YOLO has been described as an example of the learning model 16, the learning model 16 may be configured using R-CNN, Fast R-CNN, Faster R-CNN, other CNNs, a vision transformer, or the like. In addition, the learning model 16 using an algorithm such as a decision tree, a random forest, or a support vector machine (SVM) may be used. Further, the learning model 16 may be configured by combining a plurality of algorithms described above.

The diffuser determination model 17 is an image recognition learning model that determines whether a diffuser of the air conditioner or the ventilation device is an air inlet or an air outlet based on the image data of the diffuser. The diffuser determination model 17 includes, for example, a convolutional neural network (CNN) that has been trained by deep learning. The configuration of the neural network is the same as that of the learning model 16. The diffuser determination model 17 includes an input layer to which diffuser image data, which is data of an image portion (hereinafter, referred to as a diffuser image) of the diffuser of the air conditioner or the ventilation device, is input, an intermediate layer that extracts a feature amount of the diffuser image data, and an output layer that outputs degree-of-reliability data indicating the degree of reliability of the diffuser image corresponding to the air inlet or the air outlet.

A method of generating the diffuser determination model 17 will be described. First, training data including a plurality of pieces of diffuser image data and teacher data indicating whether each diffuser image corresponds to an air inlet or an air outlet is prepared. The processing unit 11 can generate the diffuser determination model 17 through optimization of a weight coefficient of the neural network using an error back propagation method, an error gradient descent method, or the like to achieve a small error (a value of a predetermined loss function or error function) between data output from the CNN in response to an input of the diffuser image in the training data to the CNN and data indicated by the teacher data.

As long as sufficient determination accuracy can be achieved, the learning model 16 may be used to determine the air inlet and the air outlet.

### <Object DB 18>

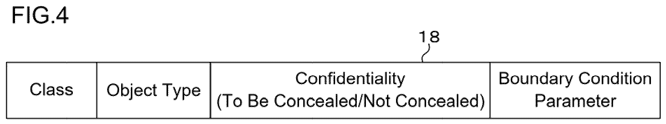

Fig. 4 is a conceptual diagram of the object DB 18 according to the present embodiment. The object DB 18 stores, for example, an object class, an object type, confidentiality, a boundary condition type, and a boundary condition parameter in association with each other. The object type includes equipment, fitting, person, industrial machine, plant, air conditioner, ventilation device, and the like as described above. The confidentiality is data indicating whether the object is a concealing target object or a non-concealing target object. The boundary condition parameter is, for example, data indicating a Dirichlet boundary condition, a Neumann boundary condition, or the like of the temperature, the pressure, and the flow velocity on the object surface. The parameters include, for example, sensible heat, latent heat, air volume, wind direction, wind speed, and the like.

The parameter of the environmental condition is an example of impact defining data defining the impact of the concealing target object on the environment of the target space.

### <Information processing method>

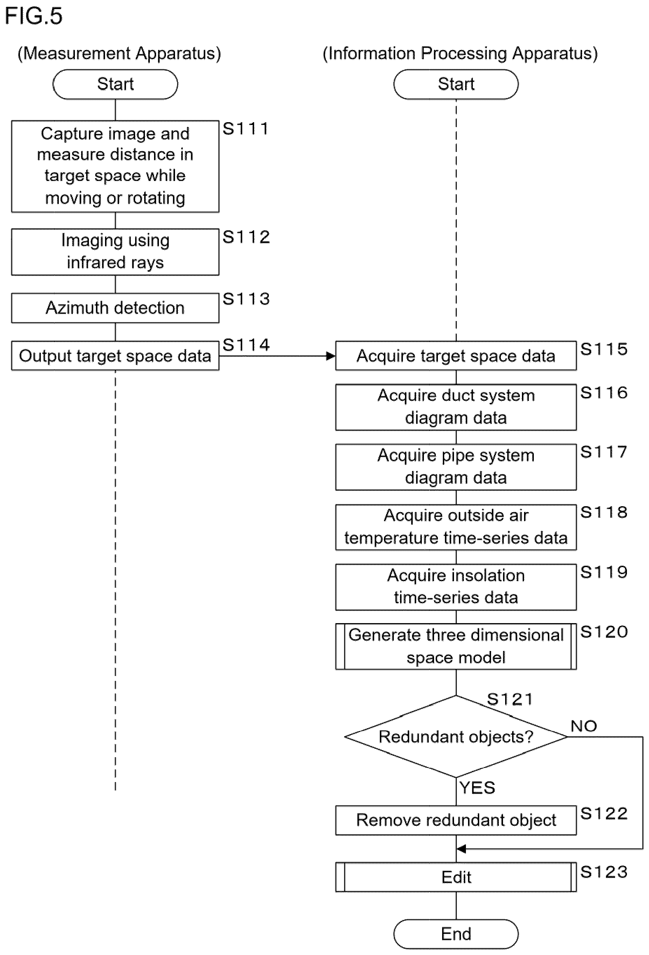

Fig. 5 is a flowchart illustrating a processing procedure of the information processing apparatus 1 system according to the present embodiment. The user moves or rotates the measurement apparatus 2 in the target space, to capture an image of and measure the distance in the target space (step S111). The infrared camera 24 captures an image of the target space using infrared rays (step S112). The azimuth sensor 31 detects the azimuth of the measurement apparatus 2 (step S113).

The terminal device 3 sends the target space data, the thermographic image data, and the azimuth data to the information processing apparatus 1 (step S114).

The processing unit 11 of the information processing apparatus 1 acquires the target space data, the thermographic image data, and the azimuth data output from the terminal device 3 (step S115).

When the azimuth data does not directly indicate the azimuth of the target space, the processing unit 11 may execute arithmetic processing to convert the azimuth data into data directly indicating the azimuth.

For example, the processing unit 11 calculates data indicating the azimuth based on the latitude, the longitude, and the time of the target space and the position of a celestial object.

For example, the processing unit 11 calculates data indicating the azimuth based on the latitude, the longitude, and the time of the target space, the direction and length of an indoor shadow.

The processing unit 11 may calculate data indicating the azimuth of the three dimensional space based on the image data and the time data.

The processing unit 11 acquires the duct system diagram data from an external device (step S116), and acquires the pipe system diagram data (step S117). The processing unit 11 acquires the outside air temperature time-series data from an external device (step S118). The processing unit 11 acquires the insolation time-series data from an external device (step S119).

For example, a sensor provided around the target space detects the outside air temperature and the amount of sunshine, and transmits the outside air temperature time-series data and the insolation time-series data to the information processing apparatus 1. The processing unit 11 acquires the outside air temperature time-series data and the insolation time-series data from the sensor. The processing unit 11 may be configured to acquire the data described above from an external server that distributes weather information such as the outside air temperature time-series data and the insolation time-series data.

The processing unit 11 generates a three dimensional space model reflecting an impact of the object on the target space, based on various types of data such as the target space data acquired (step S120).

### <Generation of three dimensional space model>

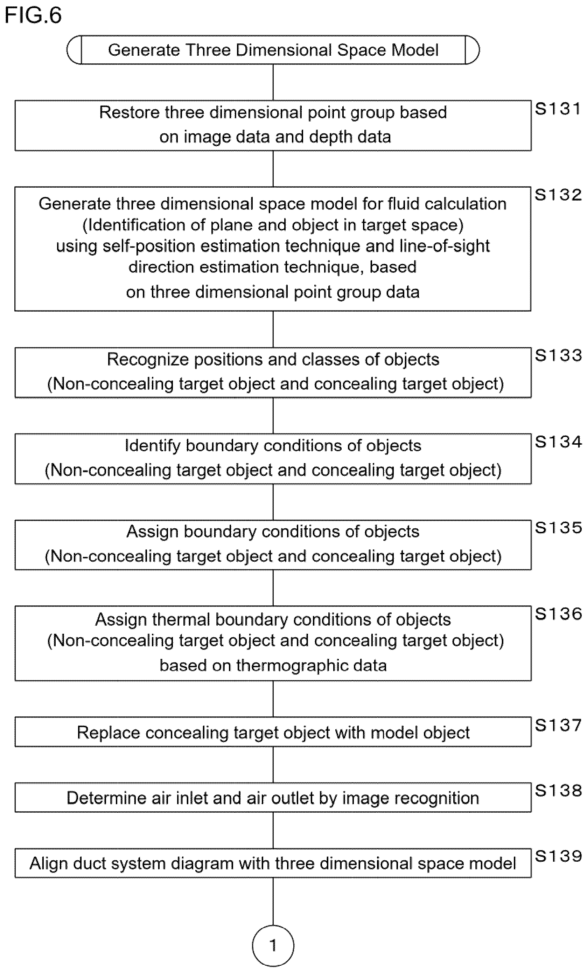

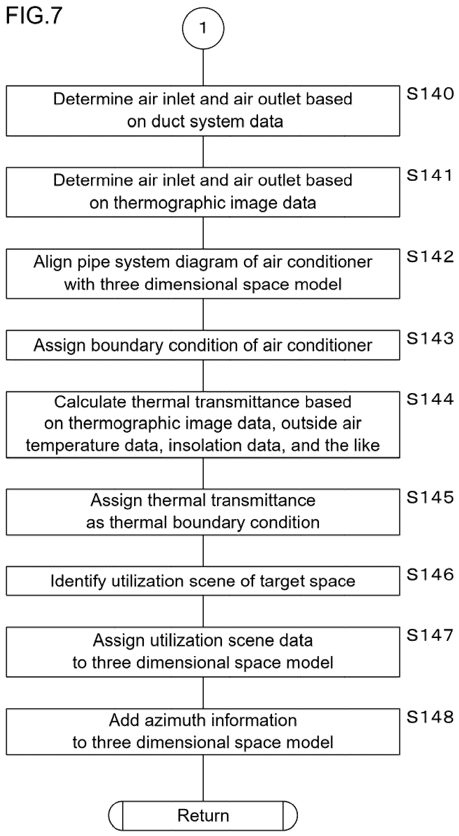

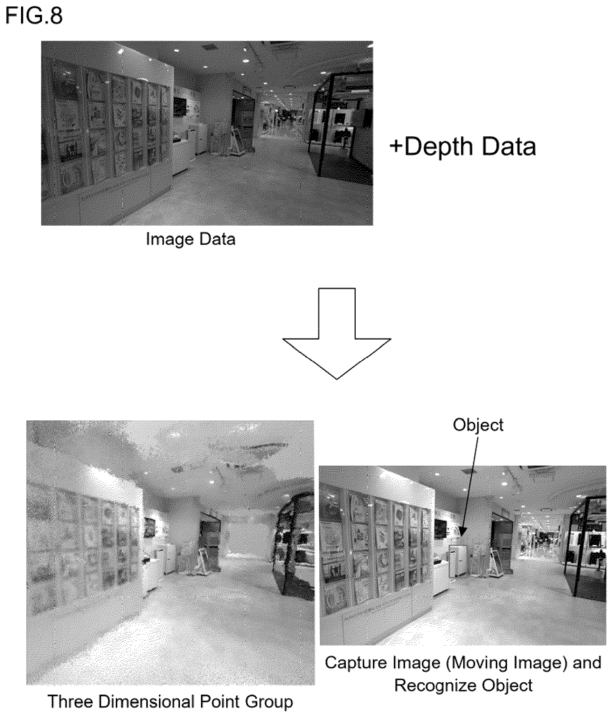

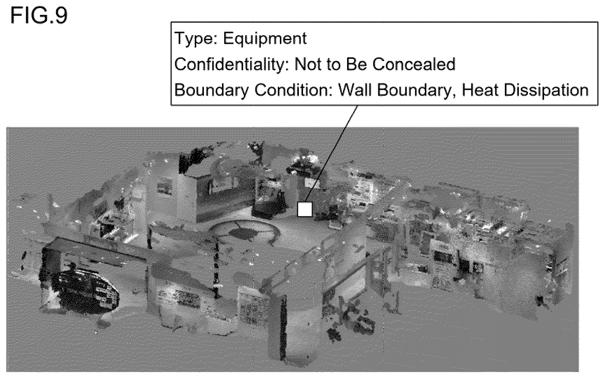

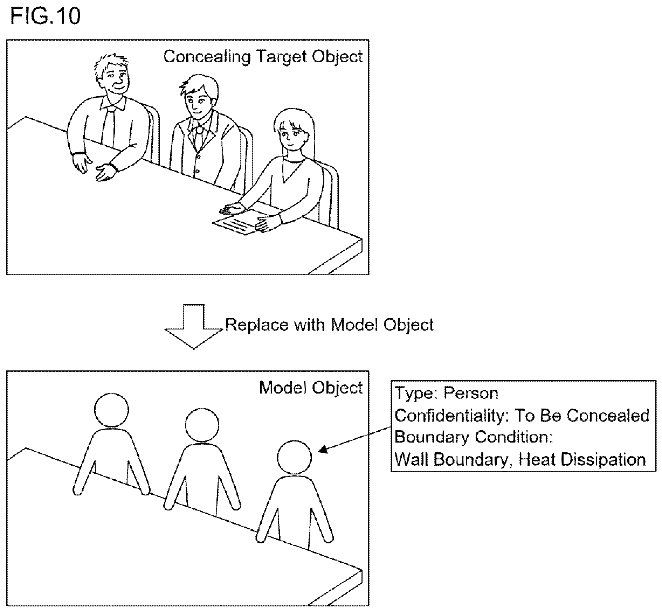

Fig. 6 and Fig. 7 are flowcharts illustrating a processing procedure for generating the three dimensional space model. Fig. 8 is an explanatory view illustrating an example of three dimensional point groups and a captured image. Fig. 9 is an explanatory view illustrating an example of the three dimensional space model. Fig. 10 is a conceptual diagram illustrating concealing processing for a concealing target object.

The overview of the processing is as follows. A three dimensional space model for fluid analysis is generated as follows. Specifically, image data and depth data are analyzed to generate three dimensional point group data of the target space. Then, the learning model 16 trained in advance is used for elements such as a heat source that need to be taken into consideration for the fluid analysis, to identify the type and the position of the elements in the three dimensional point group data in the captured image. The type and the position are reflected on the three dimensional space model.

As illustrated in Fig. 8, the processing unit 11 of the information processing apparatus 1 restores the three dimensional point group of the target space based on the image data and the depth data (step S131). In Fig. 8, the upper drawing illustrates the image data and the depth data, and the lower left drawing illustrates three dimensional point group data. The lower right drawing illustrates image data corresponding to the three dimensional point group data.

As illustrated in Fig. 9, the processing unit 11 generates a three dimensional space model for fluid calculation using a self-position estimation technique and a line-of-sight direction estimation technique based on the three dimensional point group data (step S132). By using the self-position estimation technique and the line-of-sight direction estimation technique, the processing unit 11 can identify a plane corresponding to a wall surface, a floor surface, or a ceiling surface of the target space, a plane corresponding to an outer surface of an object such as various types of devices and equipment, and the position of each plane, and generates a three dimensional space model formed by a plurality of surfaces.

As illustrated in the lower right diagram in Fig. 8, the processing unit 11 inputs the image data to the learning model 16 to detect objects (non-concealing target object and concealing target object), and recognize the positions and classes of the objects (step S133). Further, the processing unit 11 recognizes the sizes of the objects. By referring to the object DB 18 using the class as a key, the processing unit 11 recognizes whether the detected object is a concealing target object. When the image data of the object includes character and other information such as characters and symbols related to the thermal boundary condition, the processing unit 11 may be configured to read the character and other information and acquire information related to the attribute of the object and the thermal boundary condition.

The processing unit 11 identifies boundary conditions of the non-concealing target object and the concealing target object based on the object recognition result (step S134). Specifically, the processing unit 11 identifies the value of the boundary condition by reading the parameters of the boundary condition corresponding to the classes of the non-concealing target object and the concealing target object.

The processing unit 11 assigns the boundary conditions of the non-concealing target object and the concealing target object to the three dimensional space model (step S135). The position at which the boundary condition is set in the three dimensional space is identified based on the position and size of the object recognized in step S132 and the three dimensional point group.

When the processing unit 11 recognizes a chair object in the target space, the processing unit 11 may assign a thermal boundary condition of a person to the chair object. The storage unit 12 of the information processing apparatus 1 stores typical predetermined thermal boundary condition of a human object, examples of which include sensible heat and latent heat, and the processing unit 11 may assign the thermal boundary condition to the chair object.

Based on the thermographic image data, the processing unit 11 determines the temperatures, the heat amounts, or the temperature characteristics of the non-concealing target object and the concealing target object, and assigns heating conditions of these objects (step S136).

It is possible to analyze the environment of the target space in more detail by using the heat amount of the object such as equipment. Therefore, the temperature or the heat amount of the object is calculated by measurement using thermography, and is reflected on the fluid calculation model.

The concealing target object included in the three dimensional space model is replaced with a model object not including concealed information (step S137). The shape of the model object may be a substantially rectangular parallelepiped object enclosing the concealing target object, or may be an object having a shape corresponding to the concealing target object. For example, the storage unit 12 may be configured to store the model object in association with the class of the concealing target object. The processing unit 11 reads a model object corresponding to the class of the concealing target object, and replaces the concealing target object with the read model object.

The method of replacing the concealing target object with the model object is an example of a method of concealing the concealing target object. The concealing target object may be processed by any method as long as the concealing target object can be concealed.

The computer and timing for concealing the concealing target object are not limited. When the information processing apparatus 1 includes a terminal computer and a server apparatus, the method may be performed by the terminal computer or the server apparatus. The terminal device 3 may be configured to execute the processing of concealing the concealing target object.

Other boundary condition setting methods will be described below.

The processing unit 11 determines whether a diffuser of the air conditioner or the ventilation device is an air inlet or an air outlet by inputting the image data of the diffuser to the diffuser determination model 17 (step S138).

While an example is described in which the air inlet and the air outlet are determined using the machine learning model in step S138, a configuration may be employed in which, based on the image data of a diffuser, feature amounts related to an air inlet and an air outlet are calculated and whether the diffuser is the air inlet or the air outlet is determined based on the feature amounts calculated.

If the processing unit 11 can determine the air inlet and the air outlet with a sufficient degree of reliability through the image recognition processing in step S133 using the learning model 16, the processing in steps S138 to S141 may be omitted.

The processing unit 11 aligns the target space represented by the target space data with the duct system represented by the duct system data, based on the azimuth data related to the acquired azimuth of the target space, the information representing the outer shape of the target space based on the target space data, and the duct system diagram data (step S139). Note a configuration may be employed in which the target space and the duct system are aligned with reference to the position of an object whose precise position is objectively known and does not change, such as an elevator, a staircase, or a pillar.

The processing unit 11 determines whether the diffuser is the air inlet or the air outlet based on the acquired duct system diagram data (step S140). In step S140, a ducttype air inlet and air outlet, which are information that is difficult to determine by image recognition, are determined using the duct system diagram.

Regarding the air inlet and the air outlet of the ducttype air conditioner or ventilation device, since the result of the fluid calculation greatly differs depending on whether the diffuser is the air inlet or the air outlet, it is necessary to correctly determine the air inlet or the air outlet. However, since there is no great difference in appearance, it is difficult to determine the air inlet or the air outlet simply by the image recognition. In view of this, information on the air inlet and the air outlet from the duct system diagram in the target space is acquired and reflected on the three dimensional space model.

According to step S140, by using the duct system diagram for generating the three dimensional space model, it is possible to recognize the duct system of the air conditioner or the ventilation device for facilitating the setting of the thermal boundary conditions of the air inlet and the air outlet.

The processing unit 11 determines whether the diffuser is an air inlet or an air outlet based on the thermographic image data including the diffuser (step S141). In step S141, the temperatures of the air inlet and the air outlet of the air conditioner or the ventilation device and the temperature of the ceiling surface are measured by using a thermographic image to determine the air inlet and the air outlet, and the thermal boundary conditions of the air inlet and the air outlet are reflected on the three dimensional space model.

The processing unit 11 acquires the azimuth data related to the azimuth of the target space, and aligns the target space represented by the target space data with the pipe system represented by the pipe system diagram data, based on the acquired azimuth data, information representing the outer shape of the target space based on the target space data, and the pipe system diagram data (step S142).

The thermal boundary condition of the air conditioner based on the pipe system diagram data acquired is assigned to the three dimensional space model (step S143). Since the pipe system of the air conditioner and the target space are aligned, the processing unit 11 can identify the relationship between the object as the air conditioner included in the target space and the pipe system. The processing unit 11 can identify information on the thermal boundary condition of the pipe system corresponding to the object as the air conditioner, and can assign the thermal boundary condition of the object to the three dimensional space model.

When air flow analysis is performed in step S142 and step S143, the system information of the air conditioner is important. However, sufficient information of the air conditioner cannot be obtained simply by the image recognition of the object. Therefore, by using the pipe system diagram data, the system information of the indoor unit can be reflected on the three dimensional space model. The pipe system diagram may be superimposed and displayed on the three dimensional space model.

The processing unit 11 calculates the thermal transmittance of a fitting based on the thermographic image data, the outside air temperature time-series data of the target space, the insolation time-series data, and thickness data of the fitting (step S144). The processing unit 11 assigns the calculated thermal transmittance as the thermal boundary condition of the fitting (step S145). The thickness of the fitting is obtained through the image recognition processing in step S133. The processing unit 11 may be configured to calculate the thickness of the fitting by combining the result of the image recognition processing in step S133 and the three dimensional point group data.

By using the thermal transmittances of fittings such as a wall and a window, the environment of the target space can be analyzed in more detail. Therefore, in step S144 and step S145, the thermal transmittances of the fittings are calculated by measurement using thermography, and are reflected on the three dimensional space model.

According to step S144 and step S145, by using the thermographic image, the outside air temperature time-series data, and the insolation time-series data, the thermal transmittances of fittings such as a wall and a window can be calculated, whereby the input of the thermal boundary condition can be facilitated.

The processing unit 11 identifies the utilization scene of the target space based on the image data (step S146), and assigns utilization scene data indicating the identified utilization scene of the target space to the three dimensional space data (step S147). For example, an attribute is assigned to the three dimensional space data in accordance with a scene such as a hospital, a school, a factory, or an office.

The processing unit 11 may identify an underfloor outlet included in the target space based on the image data, and assign data indicating the position of the underfloor outlet to the three dimensional space data.

The processing unit 11 adds the acquired azimuth data or information based on the azimuth data to the three dimensional space model (step S148), and ends the processing of generating the three dimensional space model. For example, data indicating the azimuth of the three dimensional space model is added to the three dimensional space model.

Referring back to Fig. 5, the processing unit 11 determines whether the target space data redundantly includes objects (step S121). For example, when the similarity of the shapes and the attributes of a plurality of objects is not less than a predetermined value and the distance between the plurality of objects is shorter than a predetermined distance, the processing unit 11 determines that the plurality of objects are redundant objects.

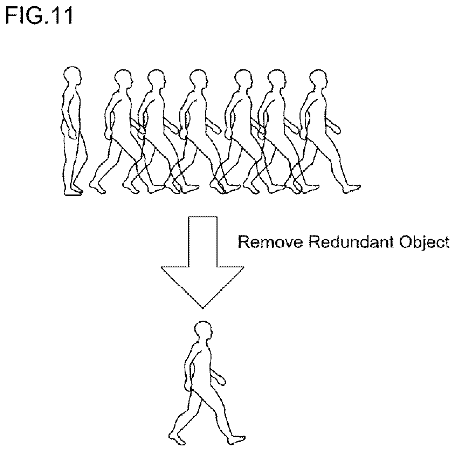

Fig. 11 is a conceptual diagram illustrating processing of removing redundant objects. When there are redundant objects (step S121: YES), the processing unit 11 removes the redundant objects as illustrated in Fig. 11 (step S122).

When the processing in step S122 ends, and when it is determined that there are no redundant objects (step S121: NO), the processing unit 11 executes editing processing for the three dimensional space model (step S123).

With desired editing enabled in addition to the automatic generation of the three dimensional space model and with the editing for the fluid calculation model accepted while the three dimensional point group data is being displayed in a superimposed manner, the fluid calculation model can be accurately generated. A special surface such as glass or a mirror that transmits or reflects infrared rays may not be correctly recognized as a surface. In such a case, the generation is manually implemented with the target surface in the three dimensional space model manually corrected. Also in a case where the type or position of the identified element is different from the actual one, the correction and the generation are manually implemented. In such a case, a more accurate fluid calculation model can be generated by accepting correction and generation, while the three dimensional point group data is being displayed in a superimposed manner.

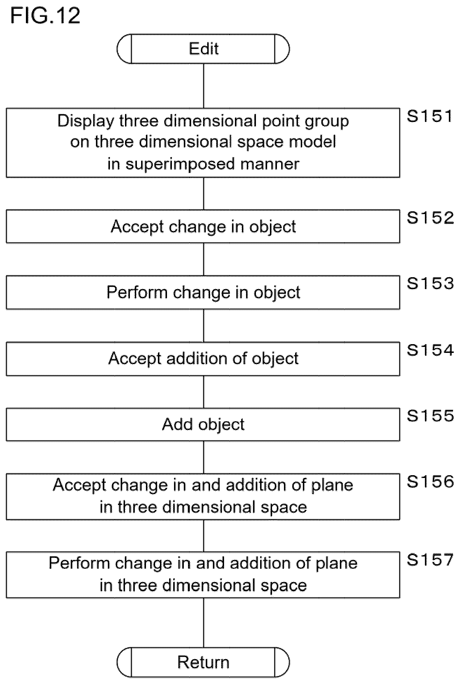

Fig. 12 is a flowchart illustrating an object editing processing procedure. The processing unit 11 causes the display unit 14 to display the generated three dimensional space model with the three dimensional point group superimposed thereon (step S151). The processing unit 11 accepts a change on the object via the operation unit 15 (step S152), and changes the object in accordance with the accepted operation (step S153). For example, the processing unit 11 accepts a change on parameters of the shape, the class, and the boundary condition of an object, and makes the change.

When people move or gather in the target space, the three dimensional space model changes. The processing unit 11 accepts an increase or decrease in the number of human objects and a change in the positions of the human objects in the target space, and changes the number and the positions of the human objects.

The processing unit 11 may be configured to acquire data related to a seat layout drawing of the target space and assign the thermal boundary condition of a person to a seat object based on the acquired data and information representing the outer shape of the target space based on the target space data. The seat layout drawing is data indicating the position of a seat object in the target space. The processing unit 11 assigns the thermal boundary condition of a human object to the seat object based on the target space represented by the target space data and the position of the seat object represented by the data related to the seat layout drawing. The storage unit 12 of the information processing apparatus 1 may store a typical predetermined thermal boundary condition of a human object, and the processing unit 11 may assign the thermal boundary condition to a seat object.

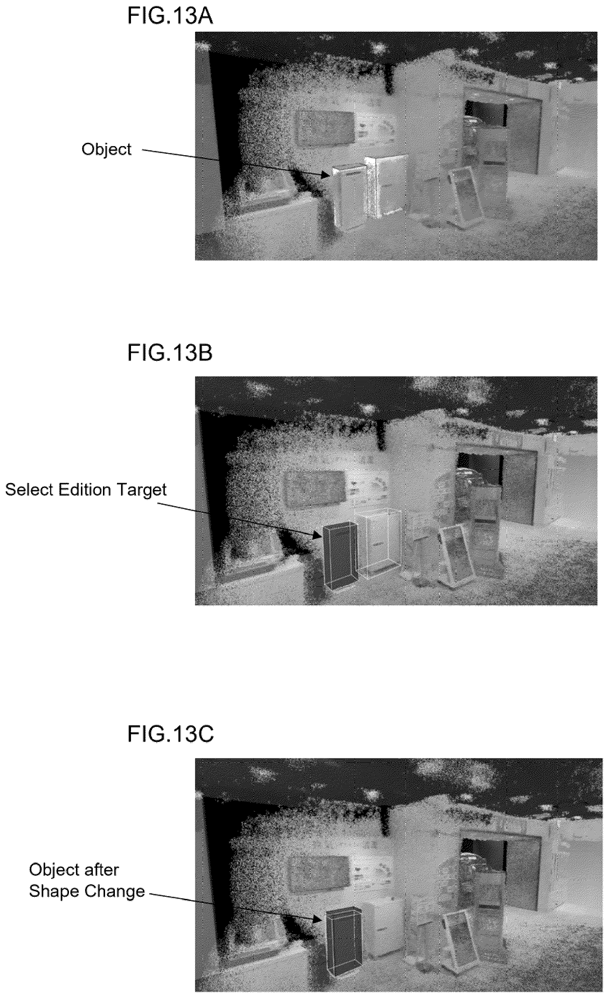

Fig. 13A, Fig. 13B, and Fig. 13C are conceptual diagrams illustrating an object changing method. Fig. 13A illustrates a three dimensional space model of a target space including a recognized object. Fig. 13B illustrates a state in which an object to be edited is selected, and Fig. 13C illustrates a state in which the shape of the object has been changed.

The processing unit 11 accepts addition of an object via the operation unit 15 (step S154), and adds the object in accordance with the accepted operation (step S155).

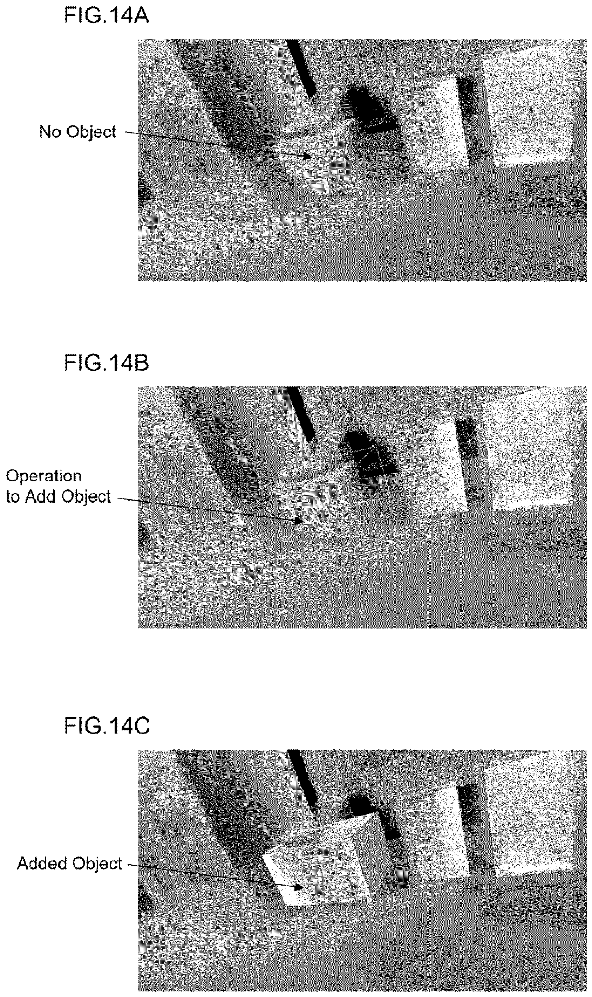

Fig. 14A, Fig. 14B, and Fig. 14C are conceptual diagrams illustrating an object adding method. Fig. 14A illustrates a three dimensional space model of a target space in which an object that actually exists is not recognized. Fig. 14B illustrates a state in which an operation of adding the object is performed, and Fig. 14C illustrates a state in which the object has been added.

The processing unit 11 accepts change and addition for a plane in the three dimensional space via the operation unit 15 (step S156), and changes or adds a plane in the three dimensional space in accordance with the accepted operation (step S157). The plane is a portion corresponding to a wall surface or the like in the target space. The user can change the position and size of the wall surface by operating the operation unit 15. The user can also add a wall surface that has not been reflected on the three dimensional space model by operating the operation unit 15.

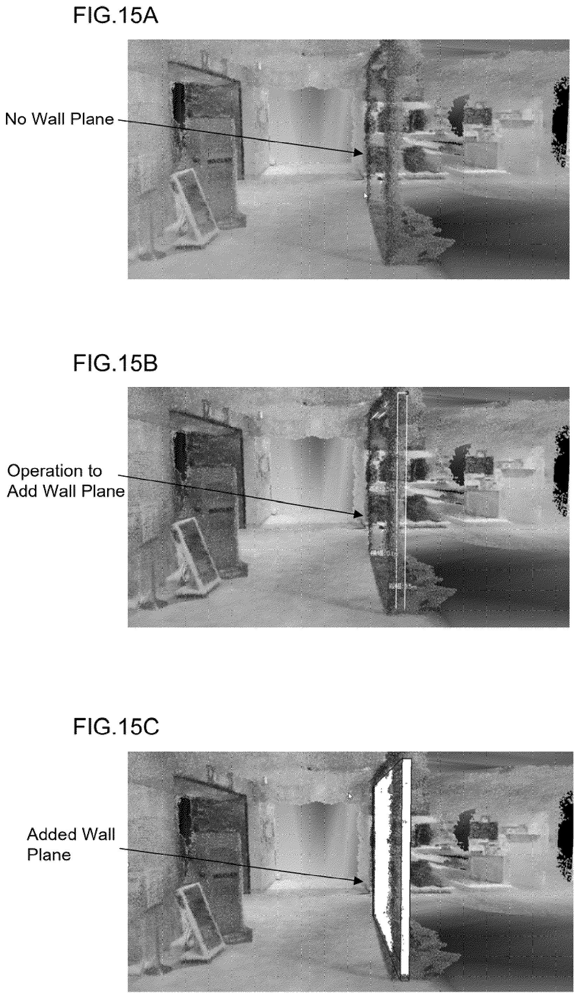

Figs. 15A, 15B, and 15C are conceptual diagrams illustrating a method of editing a plane forming a target space. Fig. 15A illustrates a three dimensional space model of a target space in which a wall plane that actually exists is not recognized. Fig. 15B illustrates a state in which an operation of adding the wall plane is performed, and Fig. 15C illustrates a state in which the wall plane has been added.

### <Advantageous effects>

With the information processing apparatus 1 and the like according to the present embodiment, it is possible to generate a three dimensional space model on which an impact of an object included in a target space on the environment of the target space is reflected, based on target space data obtained by measuring the inside of the target space from a plurality of positions.

Processes involved in generating a three dimensional space model, which is a fluid calculation model (an indoor model and an element model of equipment, a heat source, and the like), can be reduced. The measuring work for the indoor shape and the equipment is eliminated, meaning that measuring errors are eliminated.

By using the duct system diagram data, it is possible to generate a three dimensional space model to which a boundary condition is assigned in consideration of the difference between the air inlet and the air outlet.

By using the thermographic image, it is possible to generate a three dimensional space model to which a boundary condition is assigned in consideration of the difference between the air inlet and the air outlet.

Through the image recognition processing, it is possible to generate a three dimensional space model to which a boundary condition is assigned in consideration of the difference between the air inlet and the air outlet.

By using the pipe system diagram data, it is possible to generate a three dimensional space model to which the system information of the indoor unit is assigned.

Based on the thermographic image or the like, it is possible to generate a three dimensional space model to which the thermal transmittance of fittings such as a wall and a window is assigned.

The user can perform the operation to edit and change the target space and the objects included in the three dimensional space model.

The user can perform the operation to add a wall plane and an object in the target space to the three dimensional space model.

A three dimensional space model can be generated that includes azimuth information.

A three dimensional space model can be generated that includes data indicating a utilization scene of the target space.

A three dimensional space model can be generated with redundant objects removed.

A three dimensional space model can be generated with a confidential object included in the target space concealed, and with the impact of the object on the environment of the target space reflected.

A three dimensional space model can be generated with a concealing target object replaced with a model object.

While embodiments have been described above, it should be understood that various changes in mode and detail may be made without departing from the scope of the claims. Further, at least parts of the above-described embodiments may be arbitrarily combined.

### Reference Signs List

- 1: Information processing apparatus
- 2: Measurement apparatus
- 3: Terminal device
- 11: Processing unit
- 12: Storage unit
- 13: Acquisition unit
- 14: Display unit
- 15: Operation unit
- 16: Learning model
- 17: Diffuser determination model
- 18: Object DB
- 21: RGB Sensor
- 22: Depth sensor
- 23: IR projector
- 24: Infrared camera
- 31: Azimuth sensor
- P: Computer program

## Claims

1. An information processing apparatus (1) comprising:
an acquisition unit (13) configured to acquire target space data obtained by measuring an inside of a target space; and
a processing unit (11), wherein
the processing unit (11) is configured to
acquire thermographic data of the target space,
recognize an attribute and a position of a concealing target object based on the target space data acquired by the acquisition unit (13),
generate a three dimensional space model including a heat generation condition of the concealing target object based on the acquired thermographic data and reflecting the attribute and the position of the concealing target object with respect to an environment of the target space, based on the target space data acquired by the acquisition unit (13) and the attribute and the position of the concealing target object in the target space,
output the target space data and the attribute and the position of the concealing target object in association with each other, and
process concealed information of the concealing target object in the three dimensional space model.

2. An information processing apparatus (1) comprising:
an acquisition unit (13) configured to acquire target space data obtained by measuring an inside of a target space; and
a processing unit (11), wherein
the processing unit (11) is configured to
recognize an attribute and a position of a concealing target object based on the target space data acquired by the acquisition unit (13),
acquire from a storage unit (12) storing the attribute of the concealing target object and impact defining data defining an impact of the concealing target object on an environment of the target space in association with each other, the impact defining data of the concealing target object,
wherein the impact defining data includes a thermal boundary condition,
generate a three dimensional space model of the target space reflecting the attribute and the position of the concealing target object with respect to an environment of the target space based on the target space data acquired by the acquisition unit (13), the attribute and the position of the concealing target object in the target space and the acquired impact defining data,
output the target space data and the attribute and the position of the concealing target object in association with each other, and
process concealed information of the concealing target object in the three dimensional space model.

3. The information processing apparatus (1) according to claim 1 or 2, wherein the concealing target object includes at least one of a display device, a person, an industrial machine, a document, a destination display board, a bulletin object, a whiteboard, a blackboard, a tag, and a postal item.

4. The information processing apparatus (1) according to any one of claims 1 to 3, wherein the processing unit (11) determines whether the target space data redundantly includes the concealing target object.

5. The information processing apparatus (1) according to any one of claims 1 to 4, wherein
upon recognizing the concealing target object redundantly included in the target space, the processing unit (11) removes the redundant concealing target object.

6. The information processing apparatus (1) according to any one of claims 1 to 5, wherein
the processing unit (11) generates the three dimensional space model by replacing the concealing target object with a model object including no concealed information.

7. An information processing system comprising:
the information processing apparatus (1) according to any one of the claims 1 and 2.

8. The information processing system according to claim 7, further comprising: a measurement apparatus (2) configured to measure a physical quantity related to a shape in the target space, wherein the information processing apparatus (1) acquires the target space data from the measurement apparatus (2).

9. An information processing method comprising:
acquiring target space data obtained by measuring an inside of a target space;
acquiring thermographic data of the target space;
recognizing an attribute and a position of a concealing target object based on the target space data acquired;
generating a three dimensional space model including a heat generation condition of the concealing target object based on the acquired thermographic data and reflecting the attribute and the position of the concealing target object with respect to an environment of the target space, based on the target space data acquired and the attribute and the position of the concealing target object in the target space,
outputting the target space data and the attribute and the position of the concealing target object in association with each other; and
processing concealed information of the concealing target object in the three dimensional space model.

10. An information processing method comprising:
acquiring target space data obtained by measuring an inside of a target space;
recognizing an attribute and a position of a concealing target object based on the target space data acquired;
acquiring the attribute of the concealing target object and impact defining data defining an impact of the concealing target object on an environment of the target space in association with each other, the impact defining data of the concealing target object;
wherein the impact defining data includes a thermal boundary condition;
generating a three dimensional space model of the target space reflecting the attribute and the position of the concealing target object with respect to an environment of the target space based on the target space data acquired, the attribute and the position of the concealing target object in the target space and the acquired impact defining data;
outputting the target space data and the attribute and the position of the concealing target object in association with each other; and
processing concealed information of the concealing target object in the three dimensional space model.

11. A computer program (P) comprising instructions which, when the program is executed by a computer, cause the computer to carry out the method of claim 9 or 10.

## Patentansprüche

1. Informationsverarbeitungsvorrichtung (1), umfassend:
eine Erfassungseinheit (13), die konfiguriert ist, um Zielraumdaten zu erfassen, die durch Messen eines Inneren eines Zielraums erhalten werden; und
eine Verarbeitungseinheit (11), wobei
die Verarbeitungseinheit (11) konfiguriert ist, um
thermografische Daten des Zielraums zu erfassen,
ein Attribut und eine Position eines verborgenen Zielobjekts basierend auf den von der Erfassungseinheit (13) erfassten Zielraumdaten zu erkennen,
ein dreidimensionales Raummodell zu erzeugen, das eine Wärmeerzeugungsbedingung des verborgenen Zielobjekts basierend auf den erfassten thermografischen Daten enthält und das Attribut und die Position des verborgenen Zielobjekts in Bezug auf eine Umgebung des Zielraums widerspiegelt, basierend auf den von der Erfassungseinheit (13) erfassten Zielraumdaten und dem Attribut und der Position des verborgenen Zielobjekts in dem Zielraum,
die Zielraumdaten und das Attribut und die Position des verborgenen Zielobjekts in Verbindung miteinander auszugeben, und
verborgene Informationen des verborgenen Zielobjekts in dem dreidimensionalen Raummodell zu verarbeiten.

2. Informationsverarbeitungsvorrichtung (1), umfassend:
eine Erfassungseinheit (13), die konfiguriert ist, um Zielraumdaten zu erfassen, die durch Messen eines Inneren eines Zielraums erhalten werden; und
eine Verarbeitungseinheit (11), wobei
die Verarbeitungseinheit (11) konfiguriert ist, um
ein Attribut und eine Position eines verborgenen Zielobjekts basierend auf den von der Erfassungseinheit (13) erfassten Zielraumdaten zu erkennen,
von einer Speichereinheit (12), die das Attribut des verborgenen Zielobjekts speichert, und auswirkungsdefinierende Daten zu erfassen, die eine Auswirkung des verborgenen Zielobjekts auf eine Umgebung des Zielraums in Verbindung miteinander definieren, wobei die Auswirkung Daten des verborgenen Zielobjekts definiert,
wobei die auswirkungsdefinierenden Daten eine thermische Randbedingung enthalten,
ein dreidimensionales Raummodell des Zielraums zu erzeugen, das das Attribut und die Position des verborgenen Zielobjekts in Bezug auf eine Umgebung des Zielraums widerspiegelt, basierend auf den von der Erfassungseinheit (13) erfassten Zielraumdaten, dem Attribut und der Position des verborgenen Zielobjekts in dem Zielraum und den erfassten auswirkungsdefinierenden Daten,
die Zielraumdaten und das Attribut und die Position des verborgenen Zielobjekts in Verbindung miteinander auszugeben, und
verborgene Informationen des verborgenen Zielobjekts in dem dreidimensionalen Raummodell zu verarbeiten.

3. Informationsverarbeitungsvorrichtung (1) nach Anspruch 1 oder 2, wobei das verborgene Zielobjekt mindestens eines von einer Anzeigevorrichtung, einer Person, einer Industriemaschine, einem Dokument, einer Zielanzeigetafel, einem Mitteilungsobjekt, einem Whiteboard, einer Tafel, einem Identifizierungskennzeichen und einem Postgegenstand enthält.

4. Informationsverarbeitungsvorrichtung (1) nach einem der Ansprüche 1 bis 3, wobei die Verarbeitungseinheit (11) bestimmt, ob die Zielraumdaten das verborgene Zielobjekt redundant enthalten.

5. Informationsverarbeitungsvorrichtung (1) nach einem der Ansprüche 1 bis 4, wobei
beim Erkennen des verborgenen Zielobjekts, das redundant in dem Zielraum enthalten ist, die Verarbeitungseinheit (11) das redundante verborgene Zielobjekt entfernt.

6. Informationsverarbeitungsvorrichtung (1) nach einem der Ansprüche 1 bis 5, wobei
die Verarbeitungseinheit (11) das dreidimensionale Raummodell erzeugt, indem sie das verborgene Zielobjekt durch ein Modellobjekt ersetzt, das keine verborgenen Informationen enthält.

7. Informationsverarbeitungssystem, umfassend:
die Informationsverarbeitungsvorrichtung (1) nach einem der Ansprüche 1 und 2.

8. Informationsverarbeitungssystem nach Anspruch 7, ferner umfassend: eine Messvorrichtung (2), die konfiguriert ist, um eine physikalische Größe zu messen, die sich auf eine Form in dem Zielraum bezieht, wobei die Informationsverarbeitungsvorrichtung (1) die Zielraumdaten von der Messvorrichtung (2) erfasst.

9. Informationsverarbeitungsverfahren, umfassend:
Erfassen von Zielraumdaten, die durch Messen eines Inneren eines Zielraums erhalten werden;
Erfassen von thermografischen Daten des Zielraums;
Erkennen eines Attributs und einer Position eines verborgenen Zielobjekts basierend auf den erfassten Zielraumdaten;
Erzeugen eines dreidimensionalen Raummodells, das eine Wärmeerzeugungsbedingung des verborgenen Zielobjekts basierend auf den erfassten thermografischen Daten enthält und das Attribut und die Position des verborgenen Zielobjekts in Bezug auf eine Umgebung des Zielraums widerspiegelt, basierend auf den erfassten Zielraumdaten und dem Attribut und der Position des verborgenen Zielobjekts in dem Zielraum,
Ausgeben der Zielraumdaten und des Attributs und der Position des verborgenen Zielobjekts in Verbindung miteinander; und
Verarbeiten verborgener Informationen des verborgenen Zielobjekts in dem dreidimensionalen Raummodell.

10. Informationsverarbeitungsverfahren, umfassend:
Erfassen von Zielraumdaten, die durch Messen eines Inneren eines Zielraums erhalten werden;
Erkennen eines Attributs und einer Position eines verborgenen Zielobjekts basierend auf den erfassten Zielraumdaten;
Erfassen des Attributs des verborgenen Zielobjekts und von auswirkungsdefinierenden Daten, die eine Auswirkung des verborgenen Zielobjekts auf eine Umgebung des Zielraums in Verbindung miteinander definieren, wobei die Auswirkung Daten des verborgenen Zielobjekts definiert;
wobei die auswirkungsdefinierenden Daten eine thermische Randbedingung enthalten;
Erzeugen eines dreidimensionalen Raummodells des Zielraums, das das Attribut und die Position des verborgenen Zielobjekts in Bezug auf eine Umgebung des Zielraums widerspiegelt, basierend auf den erfassten Zielraumdaten, dem Attribut und der Position des verborgenen Zielobjekts in dem Zielraum und den erfassten auswirkungsdefinierenden Daten;
Ausgeben der Zielraumdaten und des Attributs und der Position des verborgenen Zielobjekts in Verbindung miteinander; und
Verarbeiten verborgener Informationen des verborgenen Zielobjekts in dem dreidimensionalen Raummodell.

11. Computerprogramm (P), umfassend Anweisungen, die, wenn das Programm von einem Computer ausgeführt wird, den Computer veranlassen, das Verfahren nach Anspruch 9 oder 10 durchzuführen.

## Revendications

1. Appareil de traitement d'informations (1), comportant :
une unité d'acquisition (13) configurée pour acquérir des données d'un espace cible obtenues en mesurant l'intérieur d'un espace cible ; et
une unité de traitement (11), dans lequel
l'unité de traitement (11) est configurée pour
acquérir des données thermographiques de l'espace cible,
reconnaître un attribut et une position d'un objet cible de dissimulation sur la base des données de l'espace cible qui ont été acquises par l'unité d'acquisition (13),
générer un modèle spatial tridimensionnel comprenant une condition de génération de chaleur de l'objet cible de dissimulation sur la base des données thermographiques acquises et reflétant l'attribut et la position de l'objet cible de dissimulation par rapport à un environnement de l'espace cible, sur la base des données de l'espace cible qui ont été acquises par l'unité d'acquisition (13) ainsi que sur la base de l'attribut et de la position de l'objet cible de dissimulation dans l'espace cible,
émettre en sortie les données de l'espace cible ainsi que l'attribut et la position de l'objet cible de dissimulation en association les uns avec les autres, et
traiter les informations dissimulées de l'objet cible de dissimulation dans le modèle spatial tridimensionnel.

2. Appareil de traitement d'informations (1), comportant :
une unité d'acquisition (13) configurée pour acquérir des données d'un espace cible obtenues en mesurant l'intérieur d'un espace cible ; et
une unité de traitement (11), dans lequel
l'unité de traitement (11) est configurée pour
reconnaître un attribut et une position d'un objet cible de dissimulation sur la base des données de l'espace cible qui ont été acquises par l'unité d'acquisition (13),
acquérir en provenance d'une unité de stockage (12) stockant l'attribut de l'objet cible de dissimulation et les données définissant l'impact qui définissent un impact de l'objet cible de dissimulation sur un environnement de l'espace cible en association les uns avec les autres, les données définissant l'impact de l'objet cible de dissimulation,
dans lequel les données définissant l'impact comprennent une condition de limite thermique,
générer un modèle spatial tridimensionnel de l'espace cible reflétant l'attribut et la position de l'objet cible de dissimulation par rapport à un environnement de l'espace cible sur la base des données de l'espace cible qui ont été acquises par l'unité d'acquisition (13), ainsi que sur la base de l'attribut et de la position de l'objet cible de dissimulation dans l'espace cible et des données définissant l'impact qui ont été acquises,
émettre en sortie les données de l'espace cible ainsi que l'attribut et la position de l'objet cible de dissimulation en association les uns avec les autres, et
traiter les informations dissimulées de l'objet cible de dissimulation dans le modèle spatial tridimensionnel.

3. Appareil de traitement d'informations (1) selon la revendication 1 ou la revendication 2, dans lequel l'objet cible de dissimulation comprend au moins l'un parmi un dispositif d'affichage, une personne, une machine industrielle, un document, un tableau d'affichage de destination, un objet de bulletin, un tableau blanc, un tableau noir, une étiquette, et un envoi postal.

4. Appareil de traitement d'informations (1) selon l'une quelconque des revendications 1 à 3, dans lequel l'unité de traitement (11) détermine si les données de l'espace cible comprennent de manière redondante l'objet cible de dissimulation.

5. Appareil de traitement d'informations (1) selon l'une quelconque des revendications 1 à 4, dans lequel
lors de la reconnaissance de l'objet cible de dissimulation compris de manière redondante dans l'espace cible, l'unité de traitement (11) supprime l'objet cible de dissimulation redondant.

6. Appareil de traitement d'informations (1) selon l'une quelconque des revendications 1 à 5, dans lequel
l'unité de traitement (11) génère le modèle spatial tridimensionnel en remplaçant l'objet cible de dissimulation par un objet modèle ne contenant aucune information dissimulée.

7. Système de traitement d'informations comportant :
l'appareil de traitement d'informations (1) selon l'une quelconque des revendications 1 et 2.

8. Système de traitement d'informations selon la revendication 7, comportant par ailleurs : un appareil de mesure (2) configuré pour mesurer une quantité physique se rapportant à une forme dans l'espace cible, dans lequel l'appareil de traitement d'informations (1) acquiert les données de l'espace cible à partir de l'appareil de mesure (2).

9. Procédé de traitement d'informations comportant les étapes consistant à :
acquérir des données d'un espace cible obtenues en mesurant l'intérieur d'un espace cible ;
acquérir des données thermographiques de l'espace cible ;
reconnaître un attribut et une position d'un objet cible de dissimulation sur la base des données spatiales cibles qui ont été acquises ;
générer un modèle spatial tridimensionnel comprenant une condition de génération de chaleur de l'objet cible de dissimulation sur la base des données thermographiques acquises et reflétant l'attribut et la position de l'objet cible de dissimulation par rapport à un environnement de l'espace cible, sur la base des données de l'espace cible qui ont été acquises ainsi que sur la base de l'attribut et de la position de l'objet cible de dissimulation dans l'espace cible,
émettre en sortie les données de l'espace cible ainsi que l'attribut et la position de l'objet cible de dissimulation en association les uns avec les autres ; et
traiter les informations dissimulées de l'objet cible de dissimulation dans le modèle spatial tridimensionnel.

10. Procédé de traitement d'informations comportant les étapes consistant à :
acquérir des données d'un espace cible obtenues en mesurant l'intérieur d'un espace cible ;
reconnaître un attribut et une position d'un objet cible de dissimulation sur la base des données spatiales cibles qui ont été acquises ;
acquérir l'attribut de l'objet cible de dissimulation et les données définissant l'impact qui définissent un impact de l'objet cible de dissimulation sur un environnement de l'espace cible en association les uns avec les autres, les données définissant l'impact de l'objet cible de dissimulation ;
dans lequel les données définissant l'impact comprennent une condition de limite thermique ;
générer un modèle spatial tridimensionnel de l'espace cible reflétant l'attribut et la position de l'objet cible de dissimulation par rapport à un environnement de l'espace cible sur la base des données de l'espace cible qui ont été acquises, ainsi que sur la base de l'attribut et de la position de l'objet cible de dissimulation dans l'espace cible et des données définissant l'impact qui ont été acquises ;
émettre en sortie les données de l'espace cible ainsi que l'attribut et la position de l'objet cible de dissimulation en association les uns avec les autres ; et
traiter les informations dissimulées de l'objet cible de dissimulation dans le modèle spatial tridimensionnel.

11. Programme informatique (P) comportant des instructions qui, quand le programme est exécuté par un ordinateur, amènent l'ordinateur à effectuer le procédé selon la revendication 9 ou la revendication 10.
